# EUROPÄISCHE PATENTSCHRIFT

(11) **EP 2 563 151 B1**
(45) Veröffentlichungstag und Bekanntmachung des Hinweises auf die Patenterteilung: **16.04.2014**
(21) Anmeldenummer: 11720004.8
(22) Anmeldetag: 27.04.2011
(51) Int. Cl.: A22C 15/00, B65B 51/04

(54) **ANORDNUNG AUS VERSCHLIESS- UND AUFHÄNGEVORRICHTUNG FÜR WURSTFÖRMIGE VERPACKUNGEN**
COMBINATION OF CLOSING AND SUSPENSION DEVICE FOR SAUSAGE-TYPE PACKAGINGS
APPAREIL A DISPOSITIF DE FERMETURE ET DE SUSPENSION POUR EMBALLAGES EN FORME DE SAUCISSES

(30) Priorität: 30.04.2010 CH 6582010
(43) Veröffentlichungstag der Anmeldung: 06.03.2013
(73) Patentinhaber: Tipper Tie Alpina GmbH, 9230 Flawil (CH)
(72) Erfinder: SBALZARINI, Lino, 9204 Andwil (CH)
(74) Vertreter: Schalch, Rainer
(86) Internationale Anmeldenummer: PCT/CH2011/000091
(87) Internationale Veröffentlichungsnummer: WO 2011/134095

(56) Entgegenhaltungen:
- EP-A1- 0 424 675
- DE-A1- 3 933 026
- DE-C1- 3 322 759

## Beschreibung

### GEBIET DER ERFINDUNG

Die Erfindung betrifft eine Anordnung umfassend eine Verschliessvorrichtung zur Bildung von langgestreckten, wurstförmigen, beidseits mit Clipsen verschlossenen Verpackungseinheiten, mit einer Verschliesswerkzeuganordnung die eine Durchlaufstrecke für die Verpackungseinheiten definiert und mit einem Halteschlaufenzubringer, welcher einem Verschliesswerkzeug der Verschliesswerkzeuganordnung Halteschlaufen zuführt, zu deren Anbringung an einem der Enden der Verpackungseinheiten mittels des dort gesetzten Clips, sowie umfassend eine Aufhängevorrichtung, welche eine Fanganordnung für die Halteschlaufen und eine Förderanordnung aufweist, mittels welcher die Verpackungseinheiten an den Halteschlaufen hängend förderbar und auf Rauchstäbe aufziehbar und darauf absetzbar sind.

### STAND DER TECHNIK

Verschliessvorrichtungen, sogenannte Clipmaschinen, sind bekannt, z.B. aus DE-A-40 13 033. Solche Vorrichtungen weisen als Verschliesswerkzeug insbesondere ein Verdrängerscherenpaar auf. Die Verdrängerscheren schnüren die in offener Scherenposition in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die eine Schere zur anderen, feststehenden Schere seitlich, bzw. in Längsrichtung der Verpackung versetzt, wodurch das in der Verpackung enthaltene Produkt aus dem zwischen den Scheren liegenden Bereich verdrängt wird und somit ein produktfreier Bereich (Zopf) zwischen zwei nun gebildeten wurstförmigen Verpackungseinheiten bzw. Würsten geschaffen wird, in den nachfolgend durch ein Verschliesswerkzeug der oder die Verschlussclips gesetzt wird bzw. werden. Dabei kann auch der Zopf zwischen den Würsten durchtrennt werden, um einzelne Würste zu bilden. In der Regel werden zwei Clips gesetzt, nämlich der zweite Clip für die vorlaufende Wurst und der erste Clip für die nachfolgende Wurst. Beim Setzen des zweiten Clips wird an der Wurst oder an der letzten einer zusammenhängenden Reihe von Würsten eine Halteschlaufe mittels des Clips befestigt, wenn dies gewünscht ist. Mit der Halteschlaufe kann die Wurst oder die Reihe von Würsten an einen Rauchstecken aufgehängt werden.

Aus den europäischen Patentanmeldungen EP 1 891 858 A1, EP 1 891 859 A1 und EP 1 891 860 A1 sind Anordnungen aus einer Verschliessvorrichtung und einer Aufhängevorrichtung bekannt, welche es erlauben, die aus der Verschliessvorrichtung austretenden Würste ohne Handarbeit an Rauchstäben aufzuhängen. Verschliessvorrichtung und Aufhängevorrichtung liegen dabei in einer Linie. Diese Anordnungen haben sich bewährt. Für besonders lange Würste oder Wurstketten, welche z.B. eine Länge zwischen einem Meter und zwei Metern haben, sind diese Anordnungen aber nicht geeignet.

Die europäische Patentanmeldung EP 0 424 675 A1 offenbart ein Verfahren und eine Vorrichtung zum mechanischen Aufhängen von Würsten. Dabei werden die Würste, die aus einer Verschliessvorrichtung abgegeben und mit einer Schlaufe versehen werden, an dieser Schlaufe von einem Haken erfasst und angehoben, so dass sie an einem weiteren Haken eines Förderwagens aufgehängt werden können.

### DARSTELLUNG DER ERFINDUNG

Der Erfindung liegt die Aufgabe zu Grunde, eine Anordnung aus Verschliessvorrichtung und Aufhängevorrichtung zum automatischen Verschliessen und Aufhängen von wurstförmigen Verpackungseinheiten zu schaffen, welche auch für sehr lange Verpackungseinheiten geeignet sind.

Diese Aufgabe wird bei der eingangs genannten Anordnung dadurch gelöst, dass die Verschliessvorrichtung in Draufsicht gesehen abgewinkelt zur Förderrichtung der Förderanordnung angeordnet ist, derart, dass die Richtung der Durchlaufstrecke abgewinkelt zur Förderrichtung liegt.

Dadurch, dass die ganze Verschliessvorrichtung abgewinkelt angeordnet wird, können auch sehr lange Würste abgegeben werden, ohne dass die Gefahr besteht, dass Würste miteinander kollidieren. Die Abwinkelung der Verschliessvorrichtung als Ganzes vermeidet dies sicherer als eine Abwinkelung nur eines Auslaufelements, z.B. eines Förderbands am Auslauf der Verschliessvorrichtung. Es ergibt sich ein Aufstellen jeder Verpackung mit der Fördereinrichtung und ein Platz frei machen jeder Verpackung im Hinblick auf die folgenden Verpackungen.

Bevorzugt ist ein Förderband am Auslauf der Verschliessvorrichtung vorgesehen, welches in Richtung der Durchlaufstrecke verläuft. Weiter ist eine Aufnahme für einzelne Würste vorgesehen, welche kippbar ist. Damit kann eine Wurst sicher in der Richtung der Durchlaufstrecke aufgenommen und erst dann durch Kippen in Richtung der Förderung freigegeben werden, wenn die vorgängigen Würste eine Stellung eingenommen haben, die eine Beschädigung von Würsten vermeidet. Bevorzugt ist weiter eine Auffangfläche für mehrere von der kippbaren Auflage zuvor abgegebene Würste vorgesehen, welche die Würste anfänglich bei der Förderung entlang der Förderanordnung abstützt, so dass diese sich nach und nach aufrichten und in die Hängeposition kommen können. Dies vermeidet ebenfalls Beschädigungen der Würste und insbesondere ein Aufeinanderliegen, indem die Auffangfläche ein Nebeneinanderliegen der aufeinander folgenden, abgekippten Würste bewirkt. Insbesondere kann die Auffangfläche entlang eines ansteigenden Abschnitts der Fördervorrichtung zur Abstützung vorgesehen sein und vorzugsweise zudem entlang eines Teils eines darauf folgenden horizontalen Abschnitts der Fördervorrichtung. Der ansteigende Abschnitt ergibt zusammen mit der Auffangfläche ein Aufstellen der Würste und damit auch Platz für die weiteren Würste.

### KURZE BESCHREIBUNG DER ZEICHNUNGEN

Im Folgenden werden Ausführungsbeispiele der Erfindung an Hand der Figuren näher erläutert. Dabei zeigt
Figur 1 eine Ansicht einer Anordnung aus einer Verschliessvorrichtung und einer Aufhängevorrichtung;
Figur 2 eine Draufsicht auf die Anordnung von Figur 1;
Figur 3 die Darstellung einer ersten Stellung der Verschliesswerkzeuge;
Figur 4 die Darstellung einer zweiten Stellung der Verschliesswerkzeuge;
Figur 5 eine Ansicht schräg von oben auf die Verschliessvorrichtung und einen Teil der Aufhängevorrichtung;
Figur 6 eine Draufsicht auf die Verschliessvorrichtung und die kippbare Aufnahme der Anordnung gemäss; und
Figur 7 eine Ansicht auf den Ausgang der Verschliessvorrichtung.

### WEGE ZUR AUSFÜHRUNG DER ERFINDUNG

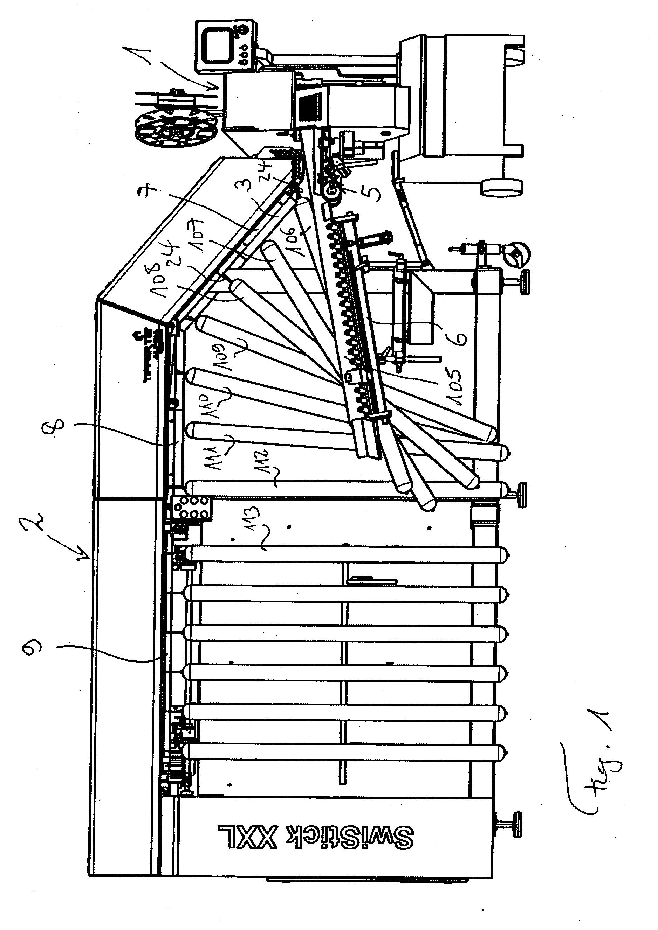

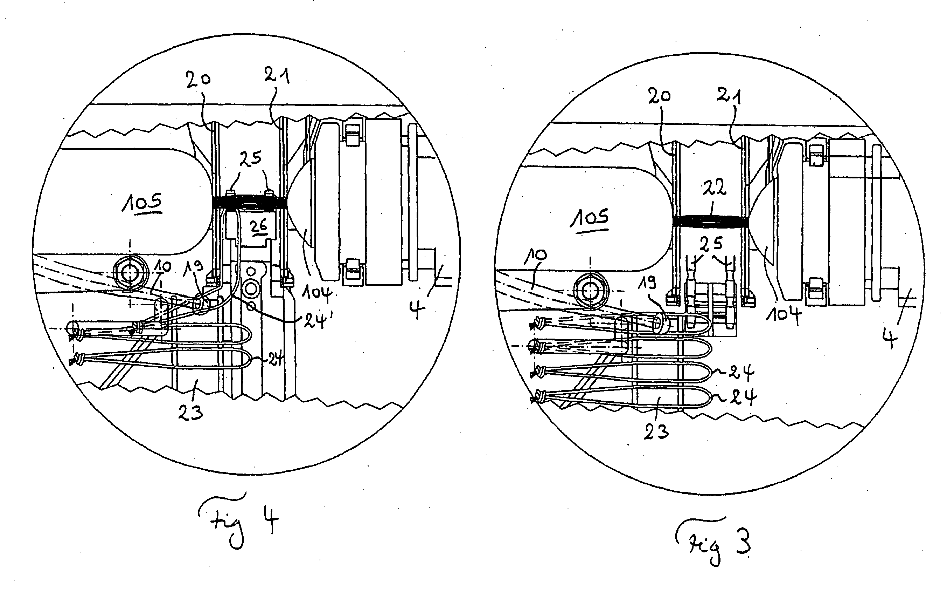

Figur 1 zeigt in Seitenansicht die Anordnung aus einer Verschliesseinrichtung 1 für wurstförmige Verpackungen und einer Aufhängevorrichtung 2 für derartige Verpackungen, an welche in der Verschliessvorrichtung eine Halteschlaufe 24 befestigt worden ist. Rechts von der Verschliesseinrichtung 1 würde sich eine nicht gezeigte Füllvorrichtung befinden, deren Füllrohr auf bekannte Weise in die Verschliesseinrichung hineinragt. Dies wird anhand der Figuren 3 und 4 noch näher erläutert. In Figur 1 ist ersichtlich, wie eine sehr lange wurstförmige Verpackungseinheit 105 die Verschliessvorrichtung verlässt und auf einem Förderband 5 und einer kippbaren Auflage 6 aufliegt. Die weiteren mit Bezugszeichen versehenen Verpackungseinheiten 106-113 haben vorgängig die Verschliessvorrichtung 1 sukzessive ebenfalls auf diese Weise verlassen. Nach der Befestigung der Halteschlaufe 24 an der jeweiligen Verpackungseinheit wird diese Halteschlaufe von der Fördereinrichtung 2 gegriffen, so dass die jeweilige Verpackungseinheit durch Förderung der Halteschlaufe 24 weiter gefördert wird, wenn sie die Verschliessvorrichtung verlassen hat. Dies erfolgt im bevorzugten Beispiel zunächst an einem ansteigenden Abschnitt 7 der Fördervorrichtung 2 und danach an einem anschliessenden horizontalen Abschnitt 8 der Fördervorrichtung 2. Danach erfolgt eine Abgabe an einen weiteren horizontalen Förderabschnitt 9, auf welchem auf bekannte Weise ein Aufhängen der Verpackungseinheiten an einem Rauchstab erfolgt. Für dieses Aufhängen bzw. das Positionieren und Loslassen der Verpackungseinheiten wird auf die Europäische Patentanmeldung EP 1 891 859 verwiesen, in welcher eine solche Übergabe an einen Rauchstab in den Abschnitten[0009] bis [0013] anhand der Figuren im Detail dargestellt ist.

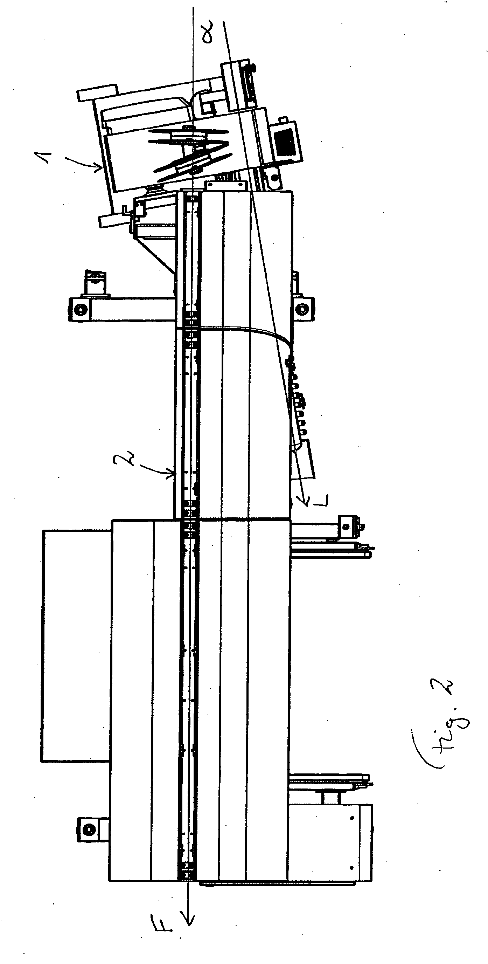

Wie in Figur 2 ersichtlich, ist gemäss der vorliegenden Erfindung die Verschliessvorrichtung 1 gegenüber der Fördervorrichtung 2 abgewinkelt. In Figur 2 ist die Förderrichtung F der Fördervorrichtung mit einem entsprechenden Pfeil dargestellt. Die Verschliessvorrichtung 1 ist als Ganzes derart abgewinkelt an der Fördervorrichtung angeordnet, dass die Durchlaufstrecke der Verpackungseinheiten durch die Verschliesswerkzeuge einen Winkel α von z.B. 10-20 Grad mit der Förderrichtung F bildet. Die Durchlaufstrecke weist die Richtung L auf, wie mittels des Pfeiles dargestellt. Ersichtlich ist, dass die Verpackungseinheit 105 in dieser Richtung liegend die Verschliessvorrichtung 1 verlassen hat. Das Verschliessen der Verpackungseinheiten bzw. Würste erfolgt auf die in den Figuren 3 und 4 dargestellte an sich bekannte Weise. Es wird dazu auf die Europäische Patentanmeldung EP 1 891 860 verwiesen, in welcher dies beschrieben ist.

Figur 3 zeigt die Verschliesswerkzeuganordnung, welche auch die Durchlaufstrecke für die wurstförmigen Verpackungseinheiten bildet. Sichtbar ist hier auch das Ende des Füllrohrs 4, das in die Verschliessvorrichtung hineinragt. Ersichtlich ist hier genauer der Schlaufenzubringer 23, welcher einzelne Halteschlaufen 24 in den Bereich des Verschliesswerkzeuges der Verschliessvorrichtung 1 bringt. Die Halteschlaufen 24 können dabei auf einem nicht näher dargestellten Trägerband befestigt sein oder können punktuell aneinander befestigt sein, sodass sie eine trägerbandlose förderbare Einheit bilden; dies ist dem Fachmann bekannt und wird hier nicht näher dargestellt. In Figur 3 sind ferner die Mittel zur Bildung des Zopfes 22 gezeigt, welche bevorzugt und auf bekannte Weise von Scherenpaaren 20 und 21 gebildet werden. Wenn diese offen sind, können die Verpackungseinheiten entlang der Durchlaufstrecke hindurchlaufen. Der füllgutfreie Bereich oder Zopf 22 wird in den Figuren zwischen den Verpackungseinheiten 105 und 104 gebildet, wobei die Verpackungseinheit 105 bereits fertig befüllt ist, sodass an ihr der Endclip gesetzt wird und die Verpackungseinheit 104 in Füllung begriffen ist, sodass an ihr der Anfangsclip gesetzt wird. Entsprechend sind in Figur 3 die beiden Clipdrahtstränge 25 für den End- bzw. Anfangsclip jeder Verpackungseinheit und das entsprechende Unterwerkzeug bzw. die Matrize 26 dargestellt. Nicht dargestellt ist das bekannte zugehörige Oberwerkzeug (Stempel). Figur 3 zeigt dabei die Stellung des Verschliesswerkzeuges vor dem Verschliessvorgang. Die dargestellten vorgeformten Clipdrähte 25 und deren Verschliesswerkzeuge sind dem Fachmann bekannt und werden hier nicht im Detail erläutert. Ferner ersichtlich ist in Figur 3 der vordere Teil eines Schwertendteiles 10 als Fanganordnung der Aufhängevorrichtung mit dem freien Ende 19, welches zum Greifen der Halteschlaufe 24' bzw. der jeweils folgenden Halteschlaufen 24 vorgesehen ist. Die Schlaufe 24 wird durch das Verschliesswerkzeug 26 auf das Schwertendteil 10 aufgezogen. Dies ist in Figur 4 ersichtlich, die in Seitenansicht darstellt, dass das Werkzeug 26 in die Verschlussposition hochgefahren ist, wodurch die Schlaufe 24' vom im Werkzeug befindlichen Clipdraht mitgenommen worden ist, damit sie beim Verschliessen des Clips um den Zopf 22 an diesem befestigt wird. Bei diesem Hochfahren des Verschliesswerkzeuges 26 wird die Halteschlaufe 24' vom Ende 19 des Schwerts 10 erfasst bzw. die Halteschlaufe wird auf das Schwert 10 aufgezogen. Bei der Wegbewegung der wurstförmigen Verpackungseinheit durch das Fördermittel bzw. das Förderband 5 wird die auf dem Schwertendteil 10 aufgezogene Halteschlaufe entlang diesem bewegt sicher aufgenommen. Eine genauere Schilderung des Aufnehmens der Halteschlaufen ist in EP 1 891 860 gegeben, insbesondere gemäss dem Absatz [0015] dieser Schrift.

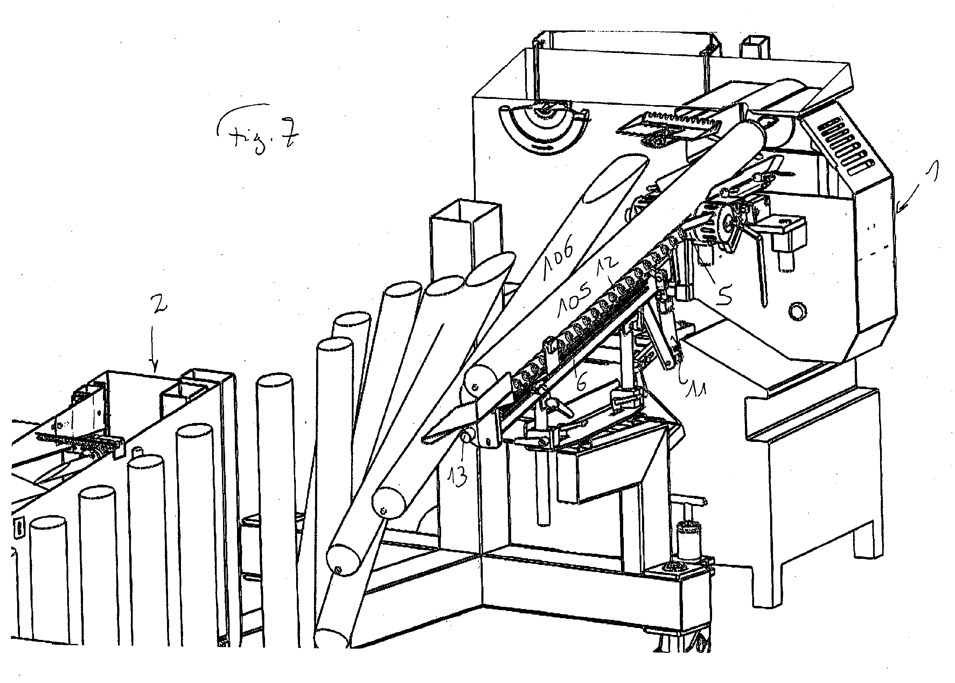

Anhand der Figuren 1 und insbesondere 5-7 werden weitere bevorzugte Ausführungsbeispiel der Erfindung beschrieben. Es ist ersichtlich, dass vorzugsweise ein Fördermittel, insbesondere ein Förderband 5 vorgesehen ist, welche die Verpackungseinheit entlang der Durchlaufstrecke durch die Verschliessvorrichtung 1 fördert. Das Förderband 5 ist dabei in Richtung L der Durchlaufstrecke ausgerichtet, so dass die Verpackungseinheit durch das Förderband gerade durch die Durchlaufstrecke gefördert wird. Das Förderband ist an seinem Ende vorzugsweise so ausgestaltet, dass das Band am Ende nachgeben kann, so dass die fast fertig oder fertig gefüllte Verpackungseinheit eine der Wurstform angepasste Verformung des Bandes bewirkt, so dass die Verpackungseinheit, welche im hinteren Bereich des Bandes nach dem Verschliessen und Trennen des Zopfes nicht mehr auf diesem aufliegt, weiterhin sicher gefördert wird, wie dies in Figur 7 gut ersichtlich ist. Solange die Verpackungseinheit gemäss den Figuren 3 und 4 in der Verschliesseinrichtung bearbeitet wird, liegt sie mit ihrem zu verschliessenden Ende im Wesentlichen horizontal, biegt sich aber entlang ihrer Länge durch, was in den Figuren nicht dargestellt ist. Bevorzugt wird die jeweilige austretende Verpackungseinheit nach der Verschliessvorrichtung nach unten hin, wobei sich "unten" auf die Stellfläche der Verschliessvorrichtung bezieht, auf eine kippbare Auflage 6 abgegeben. Diese ist um eine Kippachse 13 kippbar und es kann ein pneumatischer oder hydraulischer oder elektrischer Kippzylinder 11 für die Kippbewegung zuständig sein. Damit kann die auf der Auflage 6 befindliche Verpackungseinheit, seitlich in Richtung auf die anderen Verpackungseinheiten 106, 107 usw. abgekippt werden. Die Auflage 6 ist vorzugsweise von einer Vielzahl von Rollen 12 oder Bändern gebildet, die in einer konkav v-förmigen Anordnung für die Verpackungseinheit vorliegen und sie in der richtigen Richtung führen. Das Vorsehen der kippbaren Auflage stellt sicher, dass die Verpackungseinheiten nebeneinander, nicht aber aufeinander zu liegen kommen, was zu einer Störung der Förderung führen könnte. Die Fördervorrichtung 2 greift die Halteschlaufe 24 jeder Verpackungseinheit am Ende des Schwertes 10. Dieses kann dazu mit einer Nut versehen werden, über welche sich die Schlaufe hinwegbewegt und welche das Greifen der Schlaufe durch einen in die Nut eintauchenden Greifer bewirkt wird. Diese Greifer sind z.B. an Kettenfördermitteln angebracht, so dass diese die Verpackungseinheiten entlang entsprechender Tragarme ziehen und bewegen. Dies ist dem Fachmann bekannt und wird hier nicht genauer erläutert. In Figur 1 ist ersichtlich, dass vorzugsweise zunächst ein Ansteigender Abschnitt 7 der Fördervorrichtung und danach ein horizontaler Abschnitt 8 der Fördervorrichtung vorgesehen ist. Die Tragarme bzw. Schwerter, auf denen die Halteschlaufen laufen, sind dabei auf bekannte Weise fliegend gehalten, so dass die entsprechenden Haltemittel sich jeweils kurzzeitig von dem Schwert bzw. Tragarm entfernen, wenn eine Halteschlaufe 24 durchläuft. Zum Beispiel ist dies aus der Europäischen Patentanmeldung EP 1 891 859 bekannt und es wird insbesondere auf den Absatz [0011] dieser Schrift verwiesen und die zugehörigen Figuren.

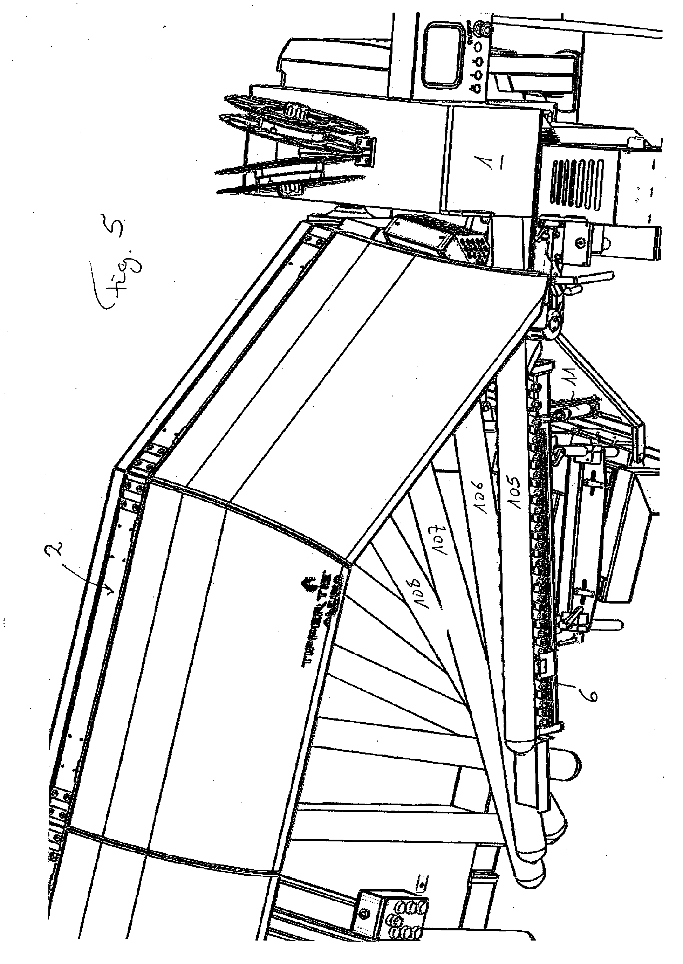

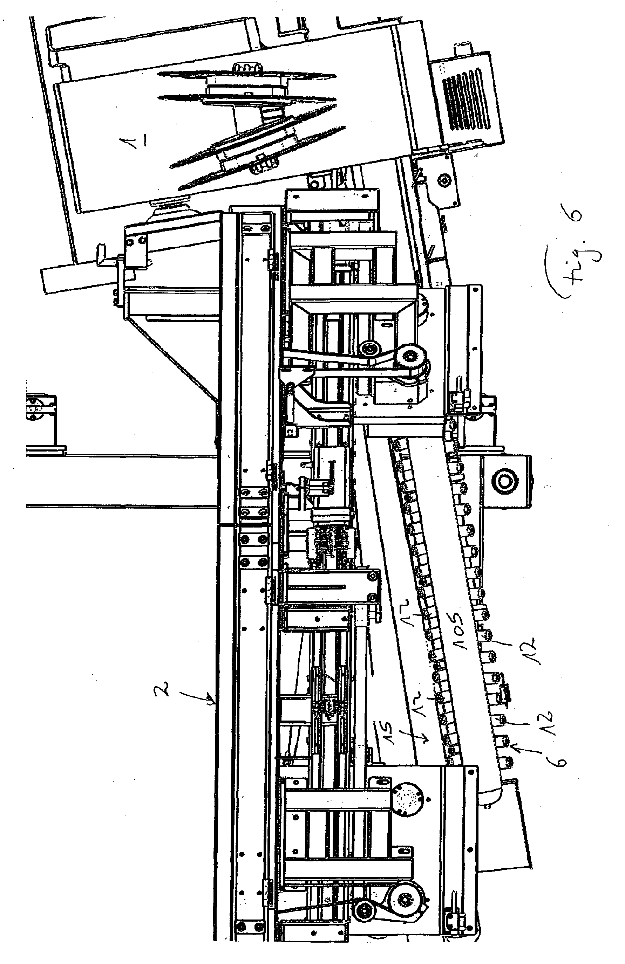

Bevorzugt ist, wie in Figur 6 ersichtlich, unterhalb der kippbaren Auflage 6 eine Aufnahme bzw. Abstützfläche 15 angeordnet. Diese stützt die Verpackungseinheiten während der Förderung entlang des Abschnittes 7 und teilweise auch des Abschnittes 8 ab, wie in Figur 1 durch die entsprechenden Positionen der Verpackungseinheiten ersichtlich ist. Die Abstützfläche 15 selber ist indes nur in Figur 5 teilweise ersichtlich. Hingegen ist auch in Figur 7, welche die Verpackungseinheiten nur teilweise zeigt, die abstützende Wirkung der Fläche 15 auf die Verpackungseinheiten ersichtlich. Diese Fläche 15 besteht z.B. aus einer eine gekrümmte Oberfläche bildenden Fläche, insbesondere aus Metall. Diese kann mit Ausformungen versehen sein, bzw. einer Oberflächenstruktur, welche möglichst geringe Reibung für die Verpackungseinheiten ergibt und/oder mit einer reibungsvermindernden Beschichtung. Die Abstützfläche 15 ist bevorzugt in ihrer Neigung zur Horizontalen einstellbar, so dass sie je nach Länge und Durchmesser der Verpackung in ihrer Lage angepasst werden kann, um das Aufstellen und Platz frei machen einer Verpackung im Hinblick auf die folgenden Verpackungen zu beeinflussen.

## Patentansprüche

1. Anordnung umfassend
(a) eine Verschliessvorrichtung (1) zur Bildung von langgestreckten, wurstförmigen, beidseits mit Clipsen (25) verschlossenen Verpackungseinheiten (104 - 113), mit einer Verschliesswerkzeuganordnung (20, 21, 26, 26') die eine Durchlaufstrecke für die Verpackungseinheiten definiert und mit einem Halteschlaufenzubringer (23), welcher einem Verschliesswerkzeug (26, 26') der Verschliesswerkzeuganordnung Halteschlaufen (24, 24') zuführt, zu deren Anbringung an einem der Enden der Verpackungseinheiten mittels des dort gesetzten Clips, sowie umfassend
(b) eine Aufhängevorrichtung (2), welche eine Fanganordnung (10) für die Halteschlaufen und eine Förderanordnung (3, 7, 8, 9) aufweist, mittels welcher die Verpackungseinheiten an den Halteschlaufen hängend förderbar und auf Rauchstäbe aufziehbar und darauf absetzbar sind,
**dadurch gekennzeichnet, dass** die Verschliessvorrichtung in Draufsicht gesehen abgewinkelt zur Förderrichtung der Förderanordnung angeordnet ist, derart, dass die Richtung der Durchlaufstrecke (LD) abgewinkelt zur Förderrichtung (F) ist.

2. Anordnung nach Anspruch 1, **dadurch gekennzeichnet, dass** nach der Durchlaufstrecke ein im Wesentlichen horizontal verlaufendes Förderband (5) vorgesehen ist, welches von einer abkippbaren Aufnahme (6) für die in Richtung der Durchlaufstrecke austretenden Verpackungseinheiten vorgesehen ist, wobei die Aufnahme (6), in Draufsicht gesehen, in ihrer Ruhestellung zur Einnahme einer zur Richtung der Durchlaufstrecke gleichgerichtet liegenden Aufnahmelage für jeweils eine aus der Verschliessvorrichtung austretende Verpackungseinheit und in ihrer Abkippstellung zur Einnahme einer die Verpackungseinheit seitlich aus der Aufnahmelage auswerfenden Kipplage ausgestaltet ist.

3. Anordnung nach Anspruch 2, **dadurch gekennzeichnet, dass** die Aufnahme von einer Mehrzahl konkav V-förmig angeordneten Rollen (12) oder Bänder gebildet wird.

4. Anordnung nach einem der Ansprüche 1 bis 3, **dadurch gekennzeichnet, dass** weiter eine Abstützfläche (15) für mehrere von der kippbaren Aufnahme zuvor abgegebenen Würste vorgesehen ist, welche derart angeordnet und ausgestaltet ist, dass Verpackungseinheiten vorbestimmter Mindestlänge bei der Förderung entlang der Förderanordnung in einem ansteigenden Förderabschnitt (7) der Förderanordnung abstützbar sind.

5. Anordnung nach einem der Ansprüche 1 bis 4, **dadurch gekennzeichnet, dass** die Abstützfläche derart ausgestaltet und angeordnet ist, dass Verpackungseinheiten vorbestimmter Mindestlänge in einem auf den ansteigenden Förderabschnitt (7) folgenden horizontalen Förderabschnitt (8) entlang eines Teils desselben auf der Abstützfläche (15) abstützbar sind.

## Claims

1. Arrangement comprising
(a) a closing device (1) for forming elongated, sausage-type packaging units (104 - 113) which are closed at both ends by clips (25), with a closing tool arrangement (20, 21, 26, 26') defining a throughput section for the packaging units and with a hanging loop feeder (23) which supplies hanging loops (24, 24') to a closing tool (26, 26') of the closing tool arrangement for their attachment to one of the ends of the packaging units by means of the clip applied there, as well as comprising
(b) a suspension device (2) having a catching arrangement (10) for the hanging loops and a transport arrangement (3, 7, 8, 9) by means of which the packaging units are transported suspended on the hanging loops and are drawn on smoke sticks and deposited thereon,
**characterized in that** the closing device is arranged angled to the transport direction of the transport arrangement as seen from the top, in such a way that the direction of the throughput section (LD) is angled with respect to the transport direction (F).

2. Arrangement according to claim 1, **characterized in that** a conveyor belt (5) running substantially horizontally is provided after the throughput section, being provided from a tiltable receptacle (6) for the packaging units exiting in the direction of the throughput section, wherein the receptacle (6) is adapted, as seen from the top, to adopt in its idle state a reception position, which is oriented in the same direction as the direction of the throughput section, for a packaging unit exiting the closing device and to adopt in its tilted state a tilted position ejecting the packaging unit laterally out of the reception position.

3. Arrangement according to claim 2, **characterized in that** the receptacle is formed by a plurality of rolls (12) or bands arranged concavely in a V-shape.

4. Arrangement according to one of the claims 1 to 3, **characterized in that** a supporting surface (15) for a plurality of sausages which were previously ejected from the tiltable position is further provided, which is arranged and adapted to support packaging units of predetermined minimum length in a rising transport section (7) of the transport arrangement during the transport along the transport arrangement.

5. Arrangement according to one of the claims 1 to 4, **characterized in that** the supporting surface is arranged and formed in such a way that packaging units of predetermined minimum length are supported on the supporting surface (15) in a horizontal transport section (8) following the rising transport section (7) along a section of it.

## Revendications

1. Arrangement comprenant
(a) un dispositif de fermeture (1) pour former des unités d'emballage (104-113) allongées et en forme de saucisson, qui sont fermées aux deux extrémités par des agrafes (25), avec un arrangement d'outils de fermeture (20, 21, 26, 26') qui définissent une section de parcours de passage pour les unités d'emballage et avec un fournisseur de boucles de retenue (23) fournissant des boucles de retenue (24, 24') à un outil de fermeture (26, 26') de l'arrangement d'outil de fermeture, pour leur attachement à un des bouts des unités d'emballage à l'aide de la boucle y appliquées, et aussi comprenant
(b) un dispositif de suspension (2) ayant un arrangement d'accrochage (10) pour les boucles suspendues et un arrangement de transport (3, 7, 8, 9) à l'aide duquel les unités d'emballage sont transportées accrochées aux boucles suspendues et tirées sur une barre à fumer et déposées là-dessus,
**caractérisé en ce que** le dispositif de fermeture est arrangé de manière anglée par rapport à la direction de transport de l'arrangement de transport, vu d'en haut, de manière telle que la direction de la section de parcours de passage (LD) soit anglée par rapport à la direction de transport (F).

2. Arrangement selon la revendication 1, **caractérisé en ce qu'**une courroie transporteuse (5) s'étendant essentiellement horizontalement est prévue en aval de la section de passage de parcours, étant alimentée à partir d'un récipient inclinable (6) pour les unités d'emballage sortant dans la direction de la section de passage de parcours, le récipient (6) étant adapté, vu d'en haut, à adopter une position de réception dans son état de repos, étant orienté dans la même direction que la direction de la section de passage de parcours, pour une unité d'emballage sortant du dispositif de fermeture et d'adopter une position inclinée dans son état incliné, éjectant l'unité d'emballage latéralement hors de la position de réception.

3. Arrangement selon la revendication 2, **caractérisé en ce que** le récipient est formé d'une pluralité de rouleaux (12) ou bandes arrangés de manière concave en forme de V.

4. Arrangement selon l'une des revendications 1 à 3, **caractérisé en ce qu'**une surface de support (15) pour une pluralité de saucissons antérieurement éjectés de la position inclinée est en outre prévue, étant arrangée et adaptée à supporter des unités d'emballage d'une longueur minimale prédéterminée dans une section de transport ascendante (7) de l'arrangement de transport pendant le transport le long de l'arrangement de transport.

5. Arrangement selon l'une des revendications 1 à 4, **caractérisé en ce que** la surface de support est arrangée et formée de sorte que des unités d'emballage d'une longueur minimale prédéterminée soient supportées sur la surface de support (15) le long d'une section de transport horizontale (8) suivant la section de transport ascendante (7) le long d'une de ses sections.
